# EUROPEAN PATENT APPLICATION

(11) **EP 4 550 504 A1**
(43) Date of publication of application: **07.05.2025**
(21) Application number: 24208553.8
(22) Date of filing: 24.10.2024
(51) Int. Cl.: H01M 10/052, H01M 50/107, H01M 50/152, H01M 50/169, H01M 50/533

(54) **LITHIUM BATTERIES**

(30) Priority: 31.10.2023 CN 202322944619 U; 20.12.2023 WO PCT/CN2023/140226
(71) Applicant: HUIZHOU EVE POWER CO., LTD, Huizhou, Guangdong 516039 (CN); Eve Power Co., Ltd., Jingmen, Hubei 448000 (CN)
(72) Inventor: ZHANG, Lei, Huizhou, Guangdong 516039 (CN); ZHAO, Fenfen, Huizhou, Guangdong 516039 (CN); LI, Qiaoying, Huizhou, Guangdong 516039 (CN)
(74) Representative: Murgitroyd & Company

(57) **Abstract**

Disclosed herein are a lithium battery and a battery module. The lithium battery includes: a housing in which an accommodation space is formed; a core disposed in the accommodation space; a negative cover disposed at a first end of the housing; a positive cover disposed at a second end of the housing; a positive current collecting disk disposed on a side of the positive cover close to the core; and a support member disposed between the positive cover and the positive current collecting disk and abutting against the positive current collecting disk.

## Description

### BACKGROUND OF DISCLOSURE

### 1. Field of the Disclosure

Embodiments of the present disclosure relate to battery technologies, and in particular, to lithium batteries.

### 2. Description of the Related Art

Generally, each of positive and negative covers of a lithium battery with an aluminum housing may achieve electrical transmission through a bent current collecting disk. In order to mount the current collecting disk between a cover and a core, the current collecting disk need to be bent once or twice. Thus, the current collecting disk in assembly has an R angle (radius of transition arc).

Usually, aluminum is taken as the metal for making a positive current collecting disk, and copper is taken as the metal for making a negative current collecting disk. Due to different metal properties of aluminum and copper, the positive current collecting disk needs to be thicker than the negative current collecting disk. Thus, the positive current collecting disk has a greater R angle than the negative current collecting disk. In addition, since a core in a lithium battery with an aluminum housing is a wrapped structure, a safety margin on a positive terminal side is less than a safety margin on a negative terminal side in the lithium battery. Thus, after the positive cover is mounted, the positive current collecting disk may press the core, resulting in an increased pressure at a local position on the core and thus a short circuit within the positive terminal of the lithium battery.

### SUMMARY

One or more embodiments of the present disclosure provide a lithium battery, which is intended to improve a technical problem that an internal pressure of the lithium battery is excessive caused by the positive terminal current collecting disk compressing the winding core, resulting in an internal short circuit in the lithium battery.

According to one or more embodiments of the present disclosure, a lithium battery includes: a housing in which an accommodation space is formed; a core disposed in the accommodation space; a negative cover disposed at a first end of the housing; a positive cover disposed at the second end of the housing opposite to the first end of the housing; a positive current collecting disk disposed on a side of the positive cover close to the core and fixedly connected with the core; and a support member disposed between the positive cover and the positive current collecting disk and abutting against the positive current collecting disk.

According to one or more embodiments of the present disclosure, a battery module includes the above-mentioned lithium battery.

### BRIEF DESCRIPTION OF THE DRAWINGS

FIG. 1 is a schematic diagram of a structure of a lithium battery according to one or more embodiments of the present disclosure.
FIG. 2 is a cross-sectional view of a lithium battery according to one or more embodiments of the present disclosure.
FIG. 3 is an enlarged diagram of part A in FIG. 2.
FIG. 4 is a schematic diagram of a structure of a positive current collecting disk in a lithium battery according to one or more embodiments of the present disclosure.
FIG. 5 is a cross-sectional view of a positive current collecting disk in a lithium battery according to one or more embodiments of the present disclosure.
FIG. 6 is a schematic diagram of a structure of a support member in a lithium battery according to one or more embodiments of the present disclosure.
FIG. 7 is a cross-sectional view of a support member in a lithium battery according to one or more embodiments of the present disclosure.

List of reference signs:
100 housing; 200 core; 210 second opening; 300 negative cover; 400 positive cover; 500 positive current collecting disk; 510 first base; 511 first opening; 512 third opening; 520 side wall; 521 guide portion; 522 vertical portion; 530 mounting groove; 600 support member; 610 second base;
620 first annular support portion; 630 second annular support portion.

### DETAILED DESCRIPTION OF EMBODIMENTS

Some embodiments of the present disclosure will be described in detail below in conjunction with the drawings. The embodiments are described for illustrative purposes only and are not intended to limit the present disclosure.

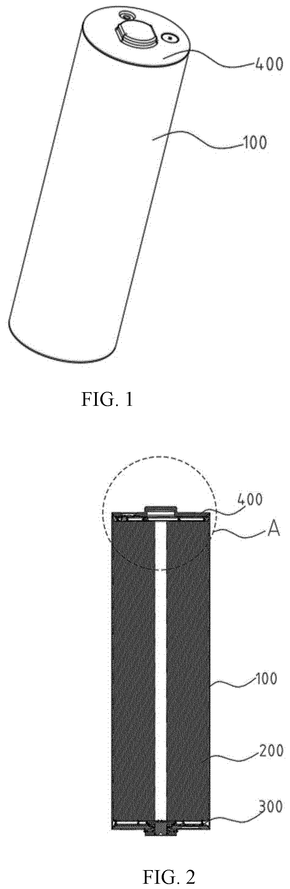

Referring to FIGS. 1 and 2, a lithium battery according to one or more embodiments of the present disclosure includes: a housing 100, a core 200, a negative cover 300, a positive cover 400, a positive current collecting disk 500 and a support member 600.

Specifically, a housing 100 is formed with an accommodation space therein. The core 200 is disposed in the accommodation space. The negative cover 300 is disposed at the first end of the housing 100. The positive cover 400 is disposed at the second end of the housing 100. The first end is arranged opposite to the second end of the housing 100. The positive current collecting disk 500 is disposed on a side of the positive cover 400 close to the core 200, and is fixedly connected with the core 200. The support member 600 is disposed between the positive cover 400 and the positive current collecting disk 500, and abuts against the positive current collecting disk 500.

By fixedly connecting the positive current collecting disk 500 directly with the core 200 without bending the positive current collecting disk 500, a bending R angle on the positive current collecting disk 500 is eliminated. Thus, after the positive cover 400 is closed, the positive current collecting disk 500 will not press the core 200, thereby improving a technical problem that excessive internal pressure of the lithium battery is caused by the positive current collecting disk 500 pressing the core 200, resulting in an internal short circuit in the lithium battery. Meanwhile, since bending the positive current collecting disk 500 is canceled, the positive current collecting disk 500 does not need to be bent during production, thereby solving another problem that bending amount of the R angle of the positive current collecting disk 500 is hard to achieve exact production accuracy and a bending angle of the R angle is difficult to control accurately. Solving this problem ensures that the consistency of the process of the lithium battery with the aluminum housing during production can be higher. And because the support member 600 is provided, the support member 600 is configured to support the positive current collecting disk 500, thereby preventing the positive current collecting disk 500 from deforming caused by pression of the core 200.

In one or more embodiments of the present disclosure, the positive current collecting disk 500 is fixedly connected with both the positive cover 400 and the side wall of the housing 100. The positive current collecting disk 500 is fixedly connected with both the positive cover 400 and the housing 100 by laser welding.

In one or more embodiments of the present disclosure, the material of the housing 100 is aluminum, the material of the positive current collecting disk 500 is aluminum, and the material of the support member 600 is plastic.

In one or more embodiments of the present disclosure, the positive cover 400, the support member 600 and the positive current collecting disk 500 are all circular. And dimensions of the positive cover 400, the support member 600 and the positive current collecting disk 500 are consistent with an area of an opening in the housing 100.

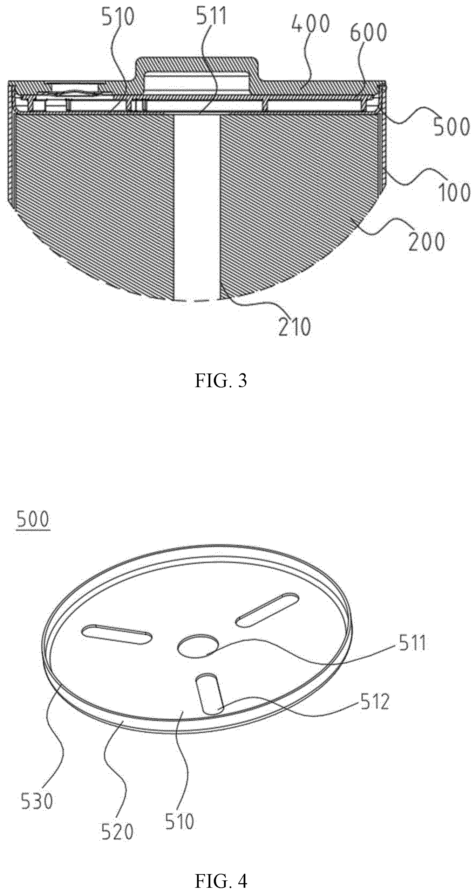

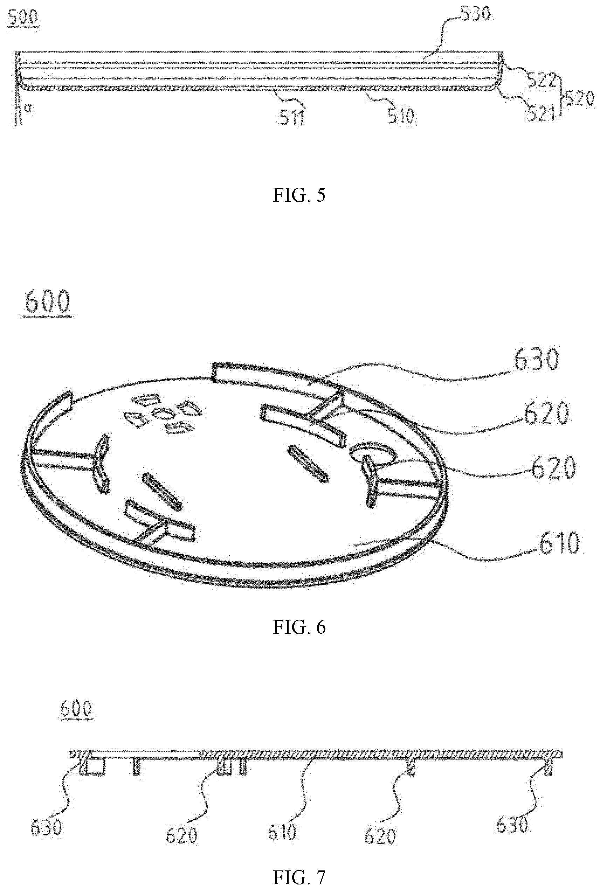

Referring to FIGS. 4 and 5, in one or more embodiments of the present disclosure, the positive current collecting disk 500 includes: a first base 510, fixedly connected with the core 200; a side wall 520, extending from periphery of the first base 510 toward the positive cover 400; and a mounting groove 530, formed between the side wall 520 and the first base 510. Since the positive current collecting disk 500 includes the first base 510 and the side wall 520, the side wall 520 extends from periphery of the first base 510 toward the positive cover 400, and the mounting groove 530 is formed between the side wall 520 and the first base 510, the support member 600 is arranged in the mounting groove 530 directly, when the support member 600 is assembled, so that overall structure of the lithium battery is more compact, thereby reducing volume of the lithium battery.

Referring to FIGS. 2 to 4, in one or more embodiments of the present disclosure, a first opening 511 is provided in a central region of the first base 510. A second opening 210 is provided on a side of the core 200 close to the positive current collecting disk 500, and is in communication with the first opening 511.

Referring to FIG. 4, a plurality of third openings 512 are also provided on the first base 510, and are arranged around the first opening 511. By providing the plurality of third openings 512, the electrolyte can infiltrate the core 200 faster.

In one or more embodiments of the present disclosure, a number of the third openings 512 is provided to be three, and the three of the third openings 512 are evenly arranged on the first base 510. Alternatively, in order to further improve the efficiency of the core 200 in infiltration, the number of the third openings 512 is provided to be four, five or more. The specific number of the third openings 512 is adjusted according to the area of the first base plate510.

In one or more embodiments of the present disclosure, the third openings 512 are strip-shaped, circular, a polygonal or an irregularly shaped.

Referring to FIGS. 6 and 7, in one or more embodiments of the present disclosure, the support member 600 includes: a second base 610, connected with the positive cover 400; a first annular support portion 620, extending from the second base 610 toward the first base 510 and close to the central region of the second base 610; and a second annular support portion 630, extending from the second base 610 toward the first base 510, close to the edge region of the second base 610, and arranged around the first annular support portion 620. By way of providing the first annular support portion 620 close to the central region of the second base 610 and providing the second annular support portion 630 close to the edge region of the second base 610, the first annular support portion 620 is configured to support the central region of the second base 610, and the second annular support portion 630 is configured to support the edge region of the second base 610. Thus, the force endured on the positive current collecting disk 500 is more uniform, avoiding deformation caused by excessive pression on respective regions of the positive current collecting disk 500. The first annular support portion 620 and the second annular support portion 630 are both annular protrusions.

In one or more embodiments of the present disclosure, the first annular support portion 620 includes a plurality of annular ribs, arranged at intervals. A gap is formed between two adjacent ones of the plurality of annular ribs.

In one or more embodiments of the present disclosure, a connection portion is further provided between the first annular support portion 620 and the second annular support portion 630. One end of the connection portion is connected with the first annular support portion 620, and the other end of the connection portion is connected with the second annular support portion 630. The connection portion is a connection strip.

In one or more embodiments of the present disclosure, the support member 600 includes: a second base 610 and a plurality of support strips. The plurality of support strips are arranged in sequence from a first side of the second base 610 toward a second side of the second base 610. The first side is opposite to the second side of the second base 610.

In one or more embodiments of the present disclosure, a length of the support strip gradually decreases from the edge region to the central region of the second base 610. Alternatively, the length of the support strip firstly increases gradually and then decreases gradually from the edge region to the central region of the second base 610.

Referring to FIG. 4, in one or more embodiments of the present disclosure, in order to better weld the positive current collecting disk 500 with the side wall of the housing 100, it is necessary to ensure that the area of the positive current collecting disk 500 is consistent with the area of the opening of the housing 100. Although this makes easier to weld the current collecting disk with the side wall of the housing 100, it also increases the difficulty of assembling the positive current collecting disk 500 into the accommodation space. Therefore, the side wall 520 is provided to include a guide portion 521, which is connected with the first base 510. The guide portion 521 is bent toward the center of the first base 510, so that an area on a side of the positive current collecting disk 500 close to the core 200 is smaller. Therefore, when manufacturing the lithium battery, the positive current collecting disk 500 is configured to be assembled into the accommodation space more conveniently. The cross section of the guide portion 521 is arc-shaped.

Referring to FIG. 5, in one or more embodiments of the present disclosure, the side wall 520 further includes a vertical portion 522, which extends from the guide portion 521 in a direction away from the first base 510. A guide angle α ranging from 0° to 50° is formed at connection between the vertical portion 522 and the guide portion 521. By way of configuring the guide angle α to range from 0° to 50°, operation of assembling the positive current collecting disk 500 into the accommodation space is more smooth.

In one or more embodiments of the present disclosure, the vertical portion 522 is welded with the positive cover 400 and the housing 100. In one or more embodiments of the present disclosure, the vertical portion 522 is welded with the edge region of the positive cover 400 and the side wall of the housing 100 by laser welding.

In one or more embodiments of the present disclosure, a length of the vertical portion 522 is 0.3 mm-2 mm. By way of configuring the length of the vertical portion 522 to be 0.3 mm-2 mm, the strength of welding the positive current collecting disk 500 with the positive cover 400 and the side wall of the housing 100 can be ensured. Preferably, the length of the vertical portion 522 is 0.5 mm, 1 mm or 1.6 mm.

When assembling the lithium battery, the negative cover 300 is fixed to the first end of the housing 100. The core 200 is fixed in the housing 100. The positive current collecting disk 500 is placed on the core 200. The positive current collecting disk 500 is welded with the core 200 by laser welding to realize electrical connection between the positive current collecting disk 500 and the core 200. Then the support member 600 and the positive cover 400 are mounted on the positive current collecting disk 500 in sequence, so that the edge region of the positive cover 400, the side wall at the opening of the housing 100 and the vertical portion 522 on the side wall 520 of the positive current collecting disk 500 are configured to be opposite to each other. The edge region of the positive cover 400, the side wall at the opening of the housing 100 and the vertical portion 522 on the side wall 520 of the positive current collecting disk 500 are welded together by laser welding. Thus, the positive cover 400 is closed to realize the assembly of the lithium battery.

Some embodiments of the present disclosure have been described in detail above. The description of the above embodiments merely aims to help to understand the present disclosure. Many modifications or equivalent substitutions with respect to the embodiments may occur to those of ordinary skill in the art based on the present disclosure. Thus, these modifications or equivalent substitutions shall fall within the scope of the present disclosure.

## Claims

1. A lithium battery, comprising:
a housing (100) in which an accommodation space is formed;
a core (200) disposed in the accommodating space;
a negative cover (300) disposed at a first end of the housing;
a positive cover (400) disposed at a second end of the housing (100) opposite to the first end;
a positive current collecting disk (500) disposed on a side of the positive cover (400) close to the core (200) and fixedly connected with the core (200); and
a support member (600) disposed between the positive cover (400) and the positive current collecting disk (500) and abutting against the positive current collecting disk (500).

2. The lithium battery according to claim 1, **characterized in that** the positive current collecting disk (500) comprises:
a first base (510) fixedly connected with the core (200); and
a side wall (520) extending from a periphery of the first base (510) toward the positive cover (400), wherein a mounting groove (530) is formed by the side wall (520) and the first base (510), and
the support member (600) is located in the mounting groove (530) and abuts against the first base (510).

3. The lithium battery according to claim 2, **characterized in that** a central part of the first base (510) is provided with a first opening (511), and a side of the core (200) close to the positive current collecting disk (500) is provided with a second opening (210) in communication with the first opening (511).

4. The lithium battery according to claim 2 or 3, **characterized in that** the first base (510) is further provided with a plurality of third openings (512) arranged around the first opening (511);
preferably, each of the third openings (512) is a strip-shaped through hole, a circular through hole, a polygonal through hole or an irregularly shaped through hole; or
preferably, a number of the third openings (512) is one of 3, 4 and 5.

5. The lithium battery according to any one of claims 2 to 4, **characterized in that** the support member (600) comprises:
a second base (610) connected with the positive cover (400);
a first annular support portion (620) extending from the second base (610) toward the first base (510), the first annular support portion (620) being close to a center of the second base (610); and
a second annular support portion (630) extending from the second base (610) toward the first base (510), wherein the second annular support portion (630) is close to a periphery of the second base (610) and arranged around the first annular support portion (620).

6. The lithium battery according to claim 5, **characterized in that** the first annular support portion (620) comprises a plurality of annular ribs arranged at intervals.

7. The lithium battery according to claim 5, **characterized in that** the support member (600) further comprises a connection portion connecting the first annular support portion (620) with the second annular support portion (630).

8. The lithium battery according to any one of claims 2 to 7, **characterized in that** the side wall (520) comprises a guide portion (521) connected with the first base (510) and bent toward a center of the first base (510).

9. The lithium battery according to claim 8, **characterized in that** the side wall (520) further comprises a vertical portion (522) extending from the guide portion (521) in a direction away from the first base (510); and
a guide angle of 0°~50° is formed at a connection between the vertical portion (522) and the guide portion (521).

10. The lithium battery according to claim 9, **characterized in that** the vertical portion (522) is welded integrally with the positive cover (400) and the housing (100);
preferably, the vertical portion (522) is laser welded with an edge of the positive cover (400) and a side wall (520) of the housing (100);
preferably, the vertical portion (522) has a length of 0.3 mm ~ 2 mm; and
preferably, the length of the vertical portion (522) is one of 0.5 mm, 1 mm and 1.6 mm.

11. The lithium battery according to any one of claims 8 to 10, **characterized in that** the guide portion (521) has an arcuate cross section.

12. The lithium battery according to claim 1, **characterized in that** each of the positive cover (400), the support member (600) and the positive current collecting disk (500) is sized to be consistent with an area of an opening formed by the housing.

13. The lithium battery according to claim 1 or 12, **characterized in that** each of the positive cover (400), the support member (600) and the positive current collecting disk (500) is circular.

14. The lithium battery according to any one of claims 1 to 13, **characterized in that** each of the housing (100) and the positive current collecting disk (500) is made of aluminum.

15. A battery module, comprising a lithium battery according to any one of claims 1 to 14.
